# FASCICULE DE BREVET EUROPEEN

(11) **EP 3 188 024 B1**
(45) Date de publication et mention de la délivrance du brevet: **09.10.2019**
(21) Numéro de dépôt: 16161613.1
(22) Date de dépôt: 22.03.2016
(51) Int. Cl.: G06F 12/02

(54) **STOCKAGE DANS UNE MÉMOIRE FLASH**
SPEICHERUNG IN EINEM FLASH-SPEICHER
STORAGE IN A FLASH MEMORY

(30) Priorité: 28.12.2015 FR 1563375
(43) Date de publication de la demande: 05.07.2017
(73) Titulaire: PROTON WORLD INTERNATIONAL N.V., 1831 Diegem (BE)
(72) Inventeur: Docquier, Guillaume, 4000 LIEGE (BE); Van Keer, Ronny, 1560 HOEILAART (BE)
(74) Mandataire: Cabinet Beaumont

(56) Documents cités:
- FR-A1- 2 950 463
- US-A1- 2013 117 503
- US-A1- 2014 025 864

## Description

### Domaine

La présente description concerne de façon générale les circuits électroniques et, plus particulièrement, les circuits exploitant une mémoire flash. La présente description vise plus particulièrement la gestion du stockage de données dans une mémoire flash.

### Exposé de l'art antérieur

Les mémoires flash sont de plus en plus utilisées dans des microcontrôleurs pour stocker de façon non volatile des informations.

Le stockage de données dans une mémoire flash présente diverses contraintes temporelles liées à la granularité des opérations réalisées, l'écriture et la lecture s'effectuant par octet tandis que l'effacement s'effectue par page.

Dans certaines applications, on souhaite s'assurer que les transactions réalisées et stockées respectent un critère d'atomicité. L'atomicité d'une transaction correspond à s'assurer que des données stockées en mémoire présentent bien un état exploitable. Cela revient à s'assurer que des données en mémoire non volatile présentent soit l'état avant la transaction soit l'état après la transaction concernée mais qu'elles ne présentent pas un état intermédiaire.

La gestion de l'atomicité de transaction est particulièrement utilisée dans des applications où une interruption de l'alimentation du circuit ou l'apparition d'une perturbation accidentelle ou volontaire peut engendrer le stockage de données dans un état les rendant soit inexploitables par la suite soit vulnérables du point de vue de la confidentialité.

On connait de nombreuses techniques de gestion d'atomicité, plus particulièrement dans des microcontrôleurs appliqués à des transactions dites de sécurité, par exemple des transactions bancaires, de contrôle d'accès, etc.

US2013117503A1 concerne le stockage de données et plus particulièrement le traitement des demandes de stockage pour des dispositifs d'enregistrement non volatils.

FR2950463A1 concerne un procédé de lecture d'une mémoire non volatile au moyen de métadonnées et d'une table de correspondance.

### Résumé

Il serait souhaitable de disposer d'une solution de stockage de données dans une mémoire flash qui respecte le critère d'atomicité des données manipulées.

Il serait souhaitable de disposer d'une solution particulièrement adaptée à des transactions basées sur des communications sans contact.

Ainsi, un mode de réalisation prévoit un procédé de stockage de données dans une mémoire non volatile, dans lequel la mémoire non volatile est divisée en :
une première région dont chaque page comporte des champs destinés à contenir des données et un champ destiné à contenir des métadonnées ;
une deuxième région dont chaque page comporte des champs destinés à contenir des données et un champ destiné à contenir des métadonnées ;
une troisième région destinée à contenir des indicateurs du déroulement d'une opération dans les première et deuxième régions,
les champs de métadonnées des première et deuxième régions étant respectivement destinés à contenir, lors d'une opération de mise à jour de données dans une page de la première région, les index d'une page dans la deuxième région et de ladite page de la première région.

Selon un mode de réalisation, les indicateurs sont au nombre de quatre et indiquent respectivement :
le début d'une opération ;
la nature de l'opération ;
une confirmation que l'indicateur de nature de l'opération est stable ; et
la fin de l'opération.

Selon un mode de réalisation, les pages de la deuxième région sont utilisées séquentiellement.

Selon un mode de réalisation, à chaque demande d'accès à une page de la mémoire, on commence par lire le champ de métadonnées de la page correspondante dans la première région pour déterminer si les données sont contenues dans cette page ou dans une page de la deuxième région.

Selon un mode de réalisation, lors d'un traitement atomique sur des données contenues dans une page de la première région, cette page contient soit les données initiales, soit les données finales, les données intermédiaires étant contenues dans une page de la deuxième région.

Un mode de réalisation prévoit un procédé de gestion d'une mémoire non volatile dans laquelle sont stockées des données par application du procédé ci-dessus.

Un mode de réalisation prévoit une mémoire flash, programmée conformément au procédé ci-dessus.

Un mode de réalisation prévoit un circuit électronique comportant une mémoire flash.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma-bloc d'un exemple de circuit électronique du type auquel s'appliquent les modes de réalisation qui vont être décrits ;
la figure 2 est un schéma-bloc illustrant un mode d'organisation d'une mémoire flash ;
la figure 3 illustre un mode de réalisation d'une affectation de données dans la mémoire de la figure 2 ; et
la figure 4 illustre, de façon très schématique et sous forme de blocs, un mode de mise en oeuvre d'un procédé de gestion du stockage dans la mémoire flash de la figure 2.

### Description détaillée

De mêmes éléments ont été désignés par de mêmes références aux différentes figures.

Par souci de clarté, seuls les étapes et éléments utiles à la compréhension des modes de réalisation qui vont être décrits ont été représentés et seront détaillés. En particulier, le fonctionnement électrique d'une mémoire flash lors des étapes d'écriture, de lecture et d'effacement n'a pas été détaillé, les modes de réalisation décrits étant compatibles avec les technologies usuelles des mémoires flash. De plus, les applications utilisant une gestion d'atomicité n'ont pas non plus été détaillées, les modes de réalisation décrits étant, là encore, compatibles avec les applications usuelles.

Dans la description qui suit, lorsqu'on fait référence aux termes approximativement, environ et, de l'ordre de, cela signifie à 10% près, de préférence à 5% près.

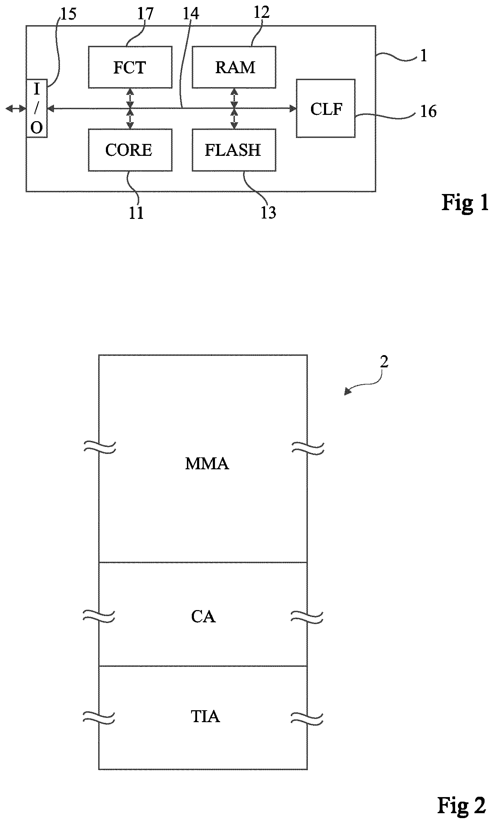

La figure 1 représente, de façon très schématique et sous forme de blocs, un mode de réalisation d'un circuit électronique 1 du type auquel s'appliquent, à titre d'exemple, les modes de réalisation qui vont être décrits.

Le circuit 1 comporte :
une unité de traitement 11 (CORE), par exemple une machine d'états, un microprocesseur, un circuit logique programmable, etc. ;
une ou plusieurs zones 12 (RAM) de stockage volatile, par exemple de type mémoire RAM ou registres, pour stocker temporairement des informations (instructions, adresses, données) pendant les traitements ;
une ou plusieurs zones de stockage non volatile, dont au moins une mémoire 2 de type flash (FLASH) pour stocker des informations de façon durable et en particulier quand le circuit n'est pas alimenté ;
un ou plusieurs bus 14 de données, d'adresses et/ou de commande entre les différents éléments internes au circuit 1 ; et
une interface d'entrée-sortie 15 (I/O) de communication, par exemple de type bus série, avec l'extérieur du circuit 1.

Dans les applications plus particulièrement visées par la présente description, le circuit 1 intègre également un circuit 16 de communication sans contact (CLF - ContactLess Front-end), de type communication en champ proche (Near Field Communication - NFC).

Par ailleurs, le circuit 1 peut intégrer d'autres fonctions, symbolisées par un bloc 17 (FCT), selon l'application, par exemple, un crypto-processeur, d'autres interfaces, d'autres mémoires, etc.

La gestion de l'atomicité des transactions dans un circuit équipé d'une mémoire flash est particulière car la mémoire flash présente une granularité de traitement par page et non par bit ou par octet, en particulier pour l'effacement. Une mémoire flash se programme, à partir d'un état initial vers des états 0 (états non conducteurs des cellules) . Cela signifie que les cellules de la mémoire doivent être initialisées à un état haut et que, pour stocker une donnée, on choisit soit de ne pas intervenir sur l'état du bit, soit de programmer ce bit à 0. Un effacement (remise dans l'état initial haut) s'effectue forcément par page mémoire. Une page est définie comme la taille minimale susceptible d'être adressée simultanément pour effacement. Typiquement, une page représente actuellement, dans une mémoire flash, 32, 64, 128, 256 ou 512 octets. En pratique, cela correspond à la taille d'un registre recevant les données en série pour les transférer en parallèle au plan mémoire pour stockage.

Afin de garantir l'atomicité de transactions, le stockage en mémoire flash des données ne doit être effectué qu'une fois que la transaction est terminée et que les données sont dites stables. En pratique, les procédés de gestion d'atomicité activent un indicateur de traitement d'une donnée lorsque celle-ci est extraite de la mémoire non volatile, puis organisent le stockage de la donnée mise à jour, une fois le traitement terminé, l'indicateur de traitement changeant alors d'état. L'atomicité peut concerner une quantité plus ou moins importante de données (d'octets) selon la nature de la transaction.

Le caractère atomique des transactions est particulièrement important dans le cas de transactions de type bancaire (paiement par exemple) où il est nécessaire de s'assurer que l'information stockée dans la mémoire flash, par exemple le solde d'un porte-monnaie électronique ou d'une autorisation d'achat, ou l'identifiant validant une transaction, est stocké de façon fiable.

Généralement, pour garantir l'atomicité d'une transaction, on utilise des espaces de stockage temporaire (Buffer) d'atomicité qui sont mis à jour avec les informations initiales, puis finales, pour transfert dans la mémoire non volatile principale. Si la mémoire est une mémoire flash, le besoin d'effacement des données pose problème en raison de sa granularité par page, qui rend l'opération relativement longue par rapport à l'opération d'écriture qui se fait par octets.

Dans les applications sans contact, les transactions doivent être effectuées très rapidement en raison du caractère fugace de la communication qui est lié à la durée pendant laquelle le circuit 1 peut communiquer avec un terminal. Or, la gestion de l'atomicité des transactions en utilisant des buffers en mémoire flash prend du temps, en raison des opérations d'effacement qui sont nécessaires pour autoriser une programmation.

Selon les modes de réalisation qui vont être décrits, on prévoit de diviser la mémoire flash en trois régions auxquelles sont affectés des rôles différents.

La figure 2 est un schéma-bloc illustrant le découpage de la mémoire flash 2 de la figure 1 en trois régions.

Une première région 22 de la mémoire 2, dite zone principale (MMA - Main Memory Area), est affectée au stockage de toute information non contenue dans les deux autres zones qui ont des rôles particuliers. Par exemple, les informations stables dans des traitements de données mettant en oeuvre une gestion de l'atomicité sont, entre deux transactions, stockées dans cette mémoire principale.

Une deuxième région 24 est une zone dite de mémoire cache (CA - Cache Area), destinée à stocker des informations pendant leur traitement pour la mise en oeuvre d'un processus d'atomicité.

Une troisième région 26 est une zone dite de stockage d'information temporaire (TIA - Temporary Information Area) destinée à stocker des informations indicatrices du déroulement d'une transaction utilisant les deux premières régions et, en particulier, des drapeaux représentatifs de l'état des données stockées dans les autres régions.

Chaque page des régions 22 et 24 comporte une partie dédiée au stockage des données et une partie dédiée au stockage de métadonnées renseignant sur la stabilité des données et l'éventualité d'un stockage des données correspondantes dans l'autre région 24 ou 22. L'utilisation des pages dans les régions 22 et 24 est transparente pour l'utilisateur. En d'autres termes, le système de stockage peut être vu comme une région mémoire de N pages, la localisation de chaque page étant soit dans la région principale 22, soit dans la région de cache 24.

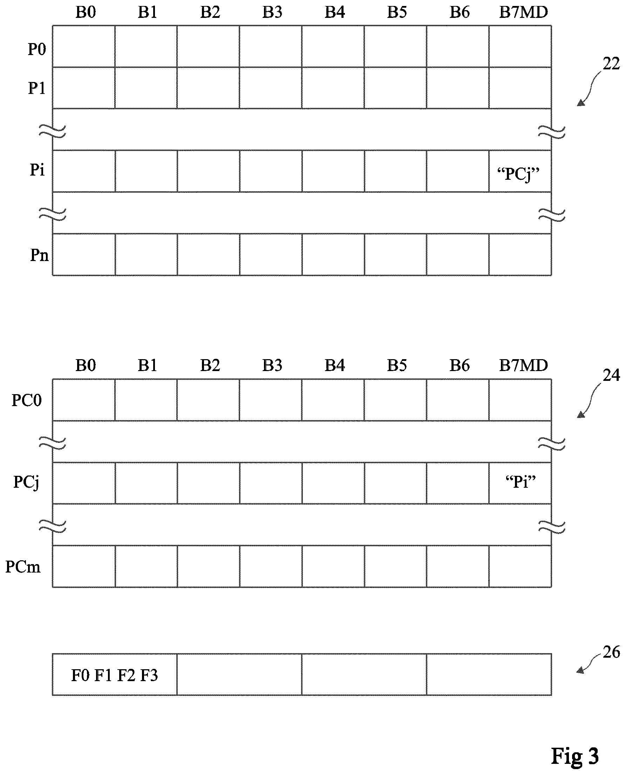

La figure 3 illustre un exemple de contenu de pages des régions 22 et 24 et de la région temporaire 26. On suppose que la région principale 22 contient n pages et que la région de cache 24 contient m pages. De préférence, le nombre m de pages de la région de cache est inférieur ou égal à n. Ce nombre conditionne le nombre d'opérations de mises à jour atomiques qu'il est possible de faire avant d'effacer la région de cache, donc d'effectuer une opération relativement longue.

Chaque page P0, P1, ..., Pi, ..., Pn de la région 22 et PC0, ..., PCj, ..., PCm de la région 24 comporte des données sur un certain nombre d'octets (par exemple B0 à B6) et un champ de métadonnées (par exemple B7).

Initialement, la région de cache 24 est vide, c'est-à-dire que les pages ont été effacées et tous les bits contiennent un état 1 (FF).

La mémoire 2 est, de façon usuelle, équipée d'un contrôleur transformant des adresses logiques en adresses physiques. Ici, lors d'une demande d'accès (en lecture ou en écriture) à la mémoire flash, d'une page d'index logique i, on accède au champ de métadonnées B7MD de la page Pi d'index physique i (ou d'une conversion de cet index) dans la région principale 22. Ces métadonnées indiquent si la donnée de la page dans la mémoire principale est correcte (en pratique, si le champ est vide, cela signifie que la donnée est correcte). Si ce n'est pas le cas, la zone de métadonnées contient l'index (l'adresse) physique PCj de la page de cache dans laquelle la page logique contenant les données est stockée. En d'autres termes, la zone de métadonnées B7MD de la région 22 contient un champ contenant l'adresse PCj dans la région 24 qui est programmée quand une page de la région 22 est traitée dans la région 24.

La zone de métadonnées B7MD d'une page de la région 24 qui contient des données de la région 22 contient un champ B7MD avec l'index ou l'adresse Pi de la région 22 dont les données sont extraites et un champ contenant un drapeau indicateur de l'utilisation de la page, c'est-à-dire programmé quand la page est déplacée dans la région principale 22.

La région de cache 24 est remplie séquentiellement de la première PC0 à la dernière page PCm au fur et à mesure des besoins de traitement de données contenues dans la région 2. Ainsi, tant que la région 24 n'est pas pleine, la région 24 peut continuer à être utilisée sans qu'il soit nécessaire de procéder à un effacement.

La région temporaire 26 sert à protéger le contenu des données des deux autres régions en cas d'interruption d'une transaction. Cette région contient une information temporaire constituée de quatre indicateurs ou drapeaux F0, F1, F2, F3. Ces drapeaux indiquent, respectivement, le début d'une opération (F0), la nature de l'opération (F1), une confirmation (F2) que le drapeau F1 est stable et la fin de l'opération (F3). L'information temporaire contient en fait tout ce qui est nécessaire pour reconstituer les données en cas d'interruption de l'opération.

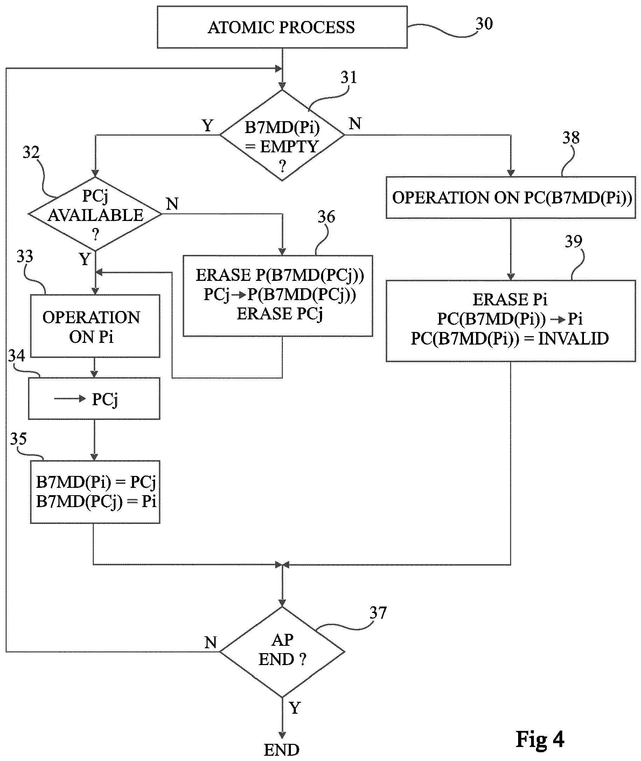

La figure 4 est un schéma-bloc illustrant la réalisation d'un traitement atomique de données (bloc 30, ATOMIC PROCESS) sur des données contenues dans une page Pi de la région 22.

Lors d'un besoin d'accès à cette page Pi, on commence (bloc 31, B7MD(Pi) = EMPTY ?) par vérifier si le traitement atomique n'a pas déjà été initié sur cette page.

Si le champ B7MD(Pi) n'indique pas l'adresse d'une page Pj dans la région 24 (sortie Y du bloc 31), alors les données résultantes de l'opération réalisées sur les données B0 à B6 de la page Pi (bloc 33, OPERATION ON Pi) sont stockées dans la première page libre PCj (bloc 34, -> PCj) de la région 24. En fin d'opération, les champs de métadonnées des pages Pi et PCj sont mis à jour pour stocker les références de l'autre page (bloc 35, B7MD(Pi) = PCj, B7MD(PCj) = Pi).

En pratique, on doit s'assurer que toutes les pages PCj ne sont pas déjà écrites. Pour cela, avant (dans l'exemple représenté en figure 4) ou après l'opération 33 sur la page Pi, on teste s'il existe une page PCj disponible (bloc 32, PCj AVAILABLE ?).

Dans l'affirmative (sortie Y du bloc 32), on effectue les étapes 33 à 35 (ou 34 et 35 si le test 32 est exécuté après l'opération 33).

Dans la négative, on efface (bloc 36) au moins une page PCj de la région 24 pour pouvoir la réutiliser. Pour cela, on commence par effacer (bloc 36, ERASE P(B7MD(PCj))) une page P de la région principale dont le contenu mis à jour est stocké en région 22 en identifiant la page Pi correspondante grâce au champ B7MD de la page PCj qui contient l'adresse de la page Pi correspondante. Puis, on transfère (bloc 36, PCj -> P(B7MD(PCj)) le contenu de cette page PCj dans la région principale 22 dans la page Pi qui vient d'être effacée. Enfin, on efface (bloc 36, ERASE PCj) la page PCj de la région 24 qui peut alors être de nouveau utilisée.

On revient alors soit à l'étape 33 (cas représenté), soit à l'étape 34.

Une fois l'étape 35 exécutée, on teste si l'opération atomique est terminée (bloc 37, AP END ?). Dans l'affirmative (sortie Y du bloc 37), le traitement s'arrête (END). Dans la négative, on revient à l'étape 31.

Selon une variante de réalisation, à l'étape 36, on efface (bloc 36) toutes les pages PCj de la région 24 pour pouvoir les réutiliser. Pour cela, on commence par effacer (bloc 36, ERASE P(B7MD(PCj))) toutes les pages P de la région principale dont le contenu mis à jour est stocké en région 22 en identifiant les pages Pi correspondantes grâce aux champs B7MD des pages PCj qui contiennent les adresses des pages Pi correspondantes. Puis, on transfère (bloc 36, PCj -> P(B7MD(PCj)) le contenu de toutes ces pages PCj dans la région principale 22 dans les pages Pi qui viennent d'être effacées. Enfin, on efface (bloc 36, ERASE PCj) toutes les pages PCj de la région 24. La région de cache est alors vide pour être de nouveau utilisée séquentiellement.

Si lors du test 31, le champ B7MD(Pi) n'est pas vide (sortie N du bloc 31) et indique l'adresse d'une page PCj dans la région 24, cela signifie que les données B0 à B6 de la page Pi ne sont pas valides (ou ne sont pas des données stables). L'opération est alors effectuée sur le contenu de la page PCj (bloc 38, OPERATION ON PC(B7MD(Pi)) identifiée par le champ B7MD de la page Pi. De plus, le résultat de l'opération doit être stocké dans une page Pi.

Pour cela (bloc 39), on efface la page Pi (bloc 39, ERASE Pi) qui contient des données non valides, on transfère (bloc 39, PC(B7MD(Pi)) -> Pi) le contenu de la page PC(B7MD(Pi)) dans la page Pi effacée, puis on marque la page PC(B7MD(Pi)) comme invalide (bloc 39, PC(B7MD(Pi))=INVALID) afin qu'elle ne soit pas réutilisée sans être au préalable effacée ou, en variante, avant un effacement complet de la région de cache 24.

Côté région temporaire 26, le drapeau F0 est activé lors du démarrage de l'opération sur les données, c'est-à-dire lors du démarrage de l'étape 33 ou 38, les drapeaux F1 et F2 sont également écrits au démarrage de l'étape 33 ou 38 afin d'indiquer la nature de l'opération, et le drapeau F3 est activé avant le test 37 pour indiquer la fin de l'opération.

En cas d'interruption d'un traitement atomique avant sa complétion, l'analyse des drapeaux F1 à F3 permet de déterminer la nature de l'opération interrompue (écriture dans la région 22 ou dans la région 24) et, par conséquent, de localiser les données stables. On est donc toujours en mesure de retrouver les dernières données stables soit dans la région 22, soit dans la région 24.

Le mode de réalisation décrit tire profit de la différence de durée entre le temps de programmation et le temps d'effacement. En pratique, dans une mémoire flash, l'opération d'effacement d'une page est relativement longue (typiquement de l'ordre de quelques millisecondes) par rapport à une opération de programmation d'un octet (typiquement de l'ordre de la dizaine de microsecondes).

On tire également profit du fait qu'une mémoire flash s'écrit par octet, ce qui rend compatible le traitement d'une transaction par écriture séquentielle dans la mémoire flash en respectant un caractère atomique des transactions. Le fait que la lecture s'effectue, dans une mémoire flash, par page entière n'est pas préjudiciable.

Le choix de la taille des pages dépend de l'application et de la taille maximale nécessaire pour stocker une transaction.

Un avantage des modes de réalisation qui ont été décrits est qu'ils améliorent la gestion d'une mémoire flash pour le traitement d'opérations devant respecter un critère d'atomicité.

Divers modes de réalisation ont été décrits. Diverses variantes et modifications apparaîtront à l'homme de l'art. Par ailleurs, la mise en oeuvre pratique des modes de réalisation qui ont été décrits est à la portée de l'homme du métier à partir des indications fonctionnelles données ci-dessus et en utilisant des circuits en eux-mêmes usuels. Notamment, l'organisation de l'adressage de la mémoire et la génération des signaux adaptés à sa commande et à cet adressage font appel à des techniques en elles-mêmes usuelles.

## Revendications

1. Procédé de stockage de données dans une mémoire non volatile (2), dans lequel la mémoire non volatile est divisée en :
une première région (22) dont chaque page comporte des champs destinés à contenir des données et un champ destiné à contenir des métadonnées ;
une deuxième région (24) dont chaque page comporte des champs destinés à contenir des données et un champ destiné à contenir des métadonnées ;
une troisième région (26) destinée à contenir des indicateurs du déroulement d'une opération dans les première et deuxième régions,
les champs de métadonnées des première et deuxième régions étant respectivement destinés à contenir, lors d'une opération de mise à jour de données dans une page de la première région, les index d'une page dans la deuxième région et de ladite page de la première région.

2. Procédé selon la revendication 1, dans lequel les indicateurs sont au nombre de quatre et indiquent respectivement :
le début d'une opération (F0) ;
la nature de l'opération (F1) ;
une confirmation que l'indicateur de nature de l'opération est stable (F2) ; et
la fin de l'opération (F3).

3. Procédé selon la revendication 1 ou 2, dans lequel les pages de la deuxième région sont utilisées séquentiellement.

4. Procédé selon l'une quelconque des revendications 1 à 3, dans lequel à chaque demande d'accès à une page de la mémoire, on commence par lire le champ de métadonnées de la page correspondante (Pi) dans la première région pour déterminer si les données sont contenues dans cette page ou dans une page de la deuxième région (24).

5. Procédé selon l'une quelconque des revendications 1 à 4, dans lequel, lors d'un traitement atomique sur des données contenues dans une page (Pi) de la première région (22), cette page contient soit les données initiales, soit les données finales, les données intermédiaires étant contenues dans une page (PCj) de la deuxième région (24).

6. Procédé de gestion d'une mémoire non volatile dans laquelle sont stockées des données par application du procédé selon l'une quelconque des revendications 1 à 5.

7. Mémoire flash, programmée conformément au procédé selon l'une quelconque des revendications 1 à 6.

8. Circuit électronique comportant une mémoire flash (2) conforme à la revendication 7.

## Patentansprüche

1. Verfahren zur Datenspeicherung in einem nichtflüchtigen Speicher (2), wobei der nichtflüchtige Speicher unterteilt ist in:
einen ersten Bereich (22), in dem jede Seite Felder aufweist, die geeignet sind, Daten zu enthalten, und ein Feld, das geeignet ist, Metadaten zu enthalten;
einen zweiten Bereich (24), in dem jede Seite Felder aufweist, die geeignet sind, Daten zu enthalten, und ein Feld, das geeignet ist, Metadaten zu enthalten;
einen dritten Bereich (26), der geeignet ist, um Indikatoren für den Fortschritt einer Operation in der ersten und zweiten Bereichen zu enthalten,
wobei die Metadatenfelder der ersten und zweiten Bereiche jeweils geeignet sind, um während eines Vorgangs der Datenaktualisierung einer Seite des ersten Bereichs die Indizes einer Seite im zweiten Bereich und der Seite des ersten Bereichs zu enthalten.

2. Verfahren nach Anspruch 1, wobei es vier Indikatoren gibt, die jeweils Folgendes anzeigen:
den Beginn einer Operation (F0);
die Art der Operation (F1);
eine Bestätigung, dass der Indikator für die Art der Operation stabil ist (F2); und
das Ende der Operation (F3).

3. Verfahren nach Anspruch 1 oder 2, wobei die Seiten des zweiten Bereichs sequentiell verwendet werden.

4. Verfahren nach einem der Ansprüche 1 bis 3, wobei für jede Anforderung für den Zugriff auf eine Seite im Speicher das Verfahren gestartet wird durch Lesen des Metadatenfeldes der entsprechenden Seite (Pi) im ersten Bereich gestartet wird, um zu bestimmen, ob die Daten in dieser Seite oder in einer Seite des zweiten Bereichs (24) enthalten sind.

5. Verfahren nach einem der Ansprüche 1 bis 4, wobei während einer atomaren Verarbeitung von Daten, die in einer Seite (Pi) des ersten Bereichs (22) enthalten sind, diese Seite entweder die Anfangsdaten oder die Enddaten enthält, wobei die Zwischendaten in einer Seite (PCj) des zweiten Bereichs (24) enthalten sind.

6. Verfahren zur Verwaltung eines nichtflüchtigen Speichers, in dem Daten durch Anwendung des Verfahrens nach einem der Ansprüche 1 bis 5 gespeichert werden.

7. Flash-Speicher, der gemäß dem Verfahren nach einem der Ansprüche 1 bis 6 programmiert ist.

8. Elektronische Schaltung, aufweisend den Flash-Speicher (2) nach Anspruch 7.

## Claims

1. A method of data storage in a non-volatile memory (2), wherein the non-volatile memory is divided into:
a first region (22) in which each page comprises fields adapted to contain data and a field adapted to contain metadata;
a second region (24) in which each page comprises fields adapted to contain data and a field adapted to contain metadata;
a third region (26) adapted to contain indicators of the progress of an operation in the first and second regions,
the metadata fields of the first and second regions being respectively adapted to contain, during an operation of data update in a page of the first region, the indexes of a page in the second region and of said page of the first region.

2. The method of claim 1, wherein there are four indicators, which respectively indicate:
the beginning of an operation (F0);
the nature of the operation (F1);
a confirmation that the indicator of the nature of the operation is stable (F2); and
the end of the operation (F3).

3. The method of claim 1 or 2, wherein the pages of the second region are used sequentially.

4. The method of any one of claims 1 to 3, wherein, for each request for access to a page in the memory, it is started by reading the metadata field of the corresponding page (Pi) in the first region to determine whether the data are contained in this page or in a page of the second region (24).

5. The method of any one of claims 1 to 4, wherein, during an atomic processing on data contained in a page (Pi) of the first region (22), this page contains either the initial data, or the final data, the intermediate data being contained in a page (PCj) of the second region (24).

6. A method of managing a non-volatile memory in which data are stored by application of the method of any one of claims 1 to 5.

7. A flash memory, programmed according to the method of any one of claims 1 to 6.

8. An electronic circuit comprising the flash memory (2) of claim 7.
